# FASCICULE DE BREVET EUROPEEN

(11) **EP 0 709 706 B1**
(45) Date de publication et mention de la délivrance du brevet: **01.08.2001**
(21) Numéro de dépôt: 95115817.9
(22) Date de dépôt: 07.10.1995
(51) Int. Cl.: G02B 26/02

(54) **Dispositif de commutation**
Schaltungsvorrichtung
Switching device

(30) Priorité: 25.10.1994 FR 9412928
(43) Date de publication de la demande: 01.05.1996
(73) Titulaire: CSEM Centre Suisse d'Electronique et de Microtechnique S.A., 2007 Neuchâtel (CH)
(72) Inventeur: Renaud, Philippe, CH-1025 Saint-Sulpice (DE); Kloeck, Benjamin, CH-2000 Neuchâtel (CH); Falco, Lucien, CH-2088 Cressier (CH)
(74) Mandataire: Roshardt, Werner Alfred, Dipl.-Phys.

(56) Documents cités:
- EP-A- 0 286 337
- EP-A- 0 463 348
- FR-A- 2 573 678
- US-A- 4 662 746
- US-A- 4 778 254

## Description

### Domaine technique

La présente invention concerne un dispositif de commutation comprenant un élément pendulaire pouvant se déplacer en va-et-vient entre deux positions d'extrémité, des électrodes d'actionnement stationnaires situées dans ces positions d'extrémité, et un circuit de commande pour agir sur l'élément pendulaire avec des forces électrostatiques. L'invention concerne en plus un procédé pour commander un tel dispositif, une installation de commutation comprenant une pluralité de tels dispositifs de commutation, et une installation optique comprenant au moins un tel dispositif de commutation.

### État de la technique

On connaît des structures micromécaniques les plus diverses influençant ou commutant, respectivement, le trajet des rayons optiques. Le but de telles structures est la commande, le traitement et la mémorisation d'informations d'images à base de pixels.

Le document US-4'229'732 (Hartstein et al) ou le US-5'142'405 (Hornbeck) décrivent des dispositifs dits DMD (= deformable mirror device), qui peuvent servir au traitement ou à la mémorisation d'images. Un tel DMD comprend essentiellement une pluralité de plaquettes réfléchissantes disposées en plan qui peuvent basculer entre des positions prédéterminées sous l'influence ou l'absence, respectivement, de forces électrostatiques. Par une conception appropriée de l'optique géométrique, des points d'image claires et sombres peuvent être produits de cette façon.

Les plaquettes réfléchissantes sont suspendues de manière élastique au-dessus de cavités appropriées du substrat, de sorte qu'elles peuvent tourner autour d'un axe situé dans le plan de la plaquette réfléchissante bidimensionnelle. Au-dessous de chaque plaquette réfléchissante, une électrode est placée apte à attirer électrostatiquement la plaquette et à la retenir dans une position de basculement. Lors de la commutation, la tension entre les plaquettes réfléchissantes et les électrodes doit avoir une telle grandeur que le champ électrostatique est suffisant pour dévier la plaquette réfléchissante. Les structures micromécaniques décrites dans les documents mentionnés se bornent à des déviations angulaires relativement faibles. En conséquence, les distances à surmonter par les forces électrostatiques sont faibles.

On connaît du document CH-633'902 (Grandjean et al) et du document US-4'564'836 (Vuilleumier et al) des obturateurs micromécaniques pour des applications optiques. Des volets sont prévus pour pouvoir pivoter de 90° autour d'axes situés dans la surface du substrat. Un évidement servant d'espace libre pour le mouvement pivotant se trouve au-dessous des volets. Des électrodes sont disposées dans l'évidement pour engendrer les champs électrostatiques (dirigés essentiellement perpendiculairement à la surface du substrat) pour l'ouverture de l'obturateur. Ces structures aussi présentent le désavantage que l'étendue du mouvement pivotant est limitée par les tensions pouvant être générées.

Un résumé des microstructures superficielles et de leur fabrication peut être tiré par exemple de l'article "Surface micromachining", C. Linder et al, J. Micromech. Microeng. 2 (1992), 122-132.

### Présentation de l'invention

L'un des buts de la présente invention est de créer un dispositif de commutation du genre mentionné au début permettant d'obtenir des vitesses élevées de commutation et des longueurs de course de commutation plus grandes même avec des tensions relativement faibles.

La solution consiste, selon l'invention, en ce que l'élément pendulaire est retenu de manière élastique de telle sorte que la valeur d'une force élastique de rappel agissant vers une position zéro est plus grande, dans une gamme essentielle d'amplitudes, que la force d'attraction électrostatique engendrée par le circuit de commande et une des électrodes d'actionnement et agissant en sens opposé, de sorte que l'élément pendulaire présente un temps de commutation essentiellement déterminé par sa fréquence propre d'oscillation mécanique.

Alors que, dans l'état de la technique, la suspension de l'élément pendulaire est dimensionnée premièrement comme support "passif" et qu'il s'agit de surmonter la force de rappel par des forces électrostatiques, l'invention incorpore la fixation à titre d'élément de construction "actif", déterminant ou dominant le temps de commutation. La rigidité du ressort de la fixation est choisie, selon l'invention, pour être relativement élevée afin d'obtenir une fréquence propre élevée et, par conséquent, un temps de commutation court. Les électrodes d'actionnement sont alimentées par des tensions juste assez élevées pour pouvoir maintenir l'élément pendulaire dans les positions d'extrémité contre la force mécanique de rappel. En règle générale, l'invention peut se passer de structures d'électrodes compliquées sous forme de peigne.

La force de rappel élastique est typiquement plus grande, au moins dans la moitié de la région des amplitudes, que la force d'attraction électrostatique entre l'électrode d'actionnement et l'élément pendulaire. Au cours du fonctionnement normal du dispositif de commutation, les rapports des forces mécaniques/électriques sont tels que les électrodes d'actionnement peuvent capter l'élément pendulaire quand il arrive à leur proximité. Les forces électrostatiques ne sont pas suffisantes, selon l'invention, pour attirer l'élément pendulaire à partir de sa position zéro. Sur la base de la conception proposée, des déviations relativement importantes peuvent être réalisées au moyen de tensions d'entretien modestes. Le temps de commutation n'en souffre pas.

L'invention se prête en particulier aux structures micromécaniques gravées dans, ou réalisées en surface de, du substrat ou déposées sur sa surface.

Les dimensions de telles microstructures se situent typiquement dans la gamme des dimensions submillimétriques (par exemple quelques centaines de µm). Cependant, l'invention n'est pas limitée à de telles petites dimensions. Le principe de l'entretien électrostatique d'un élément élastique dans ses positions d'extrémité et de la commutation déterminée par l'oscillation mécanique propre peut s'appliquer plutôt de façon générale.

Des structures micromécaniques sont réalisées, de préférence, en un matériau cristallin ou polycristallin, par exemple en polysilicium ou métal. Les procédés pour travailler de tel matériaux avec le but de fabriquer des structures selon l'invention sont connus en soi. L'avantage des matériaux mentionnés reside dans leurs bonnes propriétés élastiques, d'une part, et la facilité de leur usinage d'autre part.

L'élément pendulaire est, de préférence, une plaquette supportée par une mince fixation élastique, la plaquette étant déplaçable latéralement dans le plan de la plaquette. Dans les microstructures selon l'invention, les éléments pendulaires sont alors latéralement déplaçables dans un plan prédéterminé par la surface du substrat. La fixation comprend un ou plusieurs éléments de tige flexibles. La plaquette déplaçable peut par exemple obturer ou libérer une ouverture.

Un trou dans le substrat pour le passage d'un rayon se trouve dans un plan derrière l'élément pendulaire entre la position zéro et l'une des positions d'extrémité. Selon la position de l'élément pendulaire, le trou est ouvert ou obturé. A la place d'un trou, on peut prévoir un miroir qui est couvert ou découvert par l'élément pendulaire. Une autre variante consiste en ce que l'élément pendulaire est lui-même réfléchissant et son arrière-plan est absorbant ou transparent. L'élément pendulaire est alors déplacé dans ou à l'extérieur, respectivement, du trajet d'un rayon lumineux focalisé et peut donc produire des réflexions orientées.

Afin d'amener l'élément pendulaire depuis sa position zéro (où il est hors service) vers une des électrodes d'actionnement, des moyens spéciaux sont nécessaires qui comprennent par exemple des électrodes d'excitation afin de ramener l'élément pendulaire depuis sa position zéro dans l'une des positions d'extrémité à l'aide d'oscillations propres. Les électrodes d'excitation sont situées entre les positions d'extrémité et la position zéro, et l'élément pendulaire peut s'introduire entre les électrodes d'excitation. Les forces électrostatiques périodiques qu'exercent ces électrodes agissent sur la position zéro avec une valeur suffisante pour exercer une déviation notable. Leur action est significative dans la position zéro, contrairement à celle des électrodes d'actionnement ou d'entretien, respectivement. Il est également concevable que l'excitation de l'oscillation propre puisse être effectuée par les électrodes d'entretien elles-mêmes.

Selon la nature de la fixation de l'élément d'obturation, il se déplace le long de trajectoires courbes ou linéaires. S'il est fixé à un élément de tige par exemple, il se déplace essentiellement le long d'un arc de cercle. Par contre, s'il est retenu aux deux côtés opposés, il peut être forcé sur un trajectoire linéaire.

Par exemple, le circuit de commande est relié électriquement à une électrode formée sur l'élément pendulaire ainsi qu'aux électrodes d'actionnement ou d'entretien afin de pouvoir commander une commutation par un abaissement de la tension entre l'électrode d'actionnement et l'élément pendulaire. L'élément pendulaire peut naturellement être maintenu également à un potentiel constant.

Un procédé pour commander un dispositif de commutation du genre décrit est caractérisé par le fait que l'élément pendulaire est retenu par une tension d'entretien dans une position d'extrémité et relâché par une réduction temporaire de la tension d'entretien entre l'élément pendulaire et l'électrode pour qu'il puisse osciller, sur la base de son oscillation propre, dans la position d'extrémité opposée où il est attiré par l'autre électrode d'actionnement (ou par sa tension d'entretien, respectivement).

Il suffit d'abaisser la tension jusqu'à ce que l'élément pendulaire s'échappe de la zone d'influence (relati vement petite) de l'électrode concernée. Il ne sera généralement pas nécessaire d'abaisser la tension pendant plus longtemps qu'un quart par exemple de la période d'oscillation propre (à savoir moins de pi/2Wo, Wo = fréquence de résonance). Dans la plupart des cas, même un huitième de la durée de commutation ou demi-période d'oscillation sera largement suffisant.

Comme on l'a déjà mentionné, l'élément pendulaire est de préférence mis en service par le biais de ses électrodes d'excitation en y appliquant un signal électrique périodique correspondant à la fréquence propre, jusqu'à ce qu'il arrive dans la zone d'influence d'une électrode d'entretien et attiré par celle-ci.

Afin de réaliser une installation de commutation, plusieurs dispositifs de commutation selon l'invention sont reliés au circuit de commande par leurs électrodes pendulaires et/ou leurs électrodes d'actionnement à travers des conducteurs communs. Un dispositif de commutation sélectionné peut alors être mis en action par l'abaissement de la tension (réduction de la différence du potentiel) sur les conducteurs qui se croisent au dispositif de commutation sélectionné. Les dispositifs de commutation sont de préférence arrangés de manière à former un réseau bidimensionnel régulier, les électrodes pendulaires ou leurs électrodes d'actionnement correspondantes des dispositifs de commutation individuels étant reliées par rangs et colonnes. De telles installations de commutations sont particulièrement utiles pour la génération ou le traitement d'images sur la base de trames à bits mémorisées.

Une installation optique selon l'invention comprend au moins un dispositif de commutation du type décrit qui est disposé comme écran commandé dans le foyer d'un système de lentilles optique. Un autre système de lentilles peut être disposé derrière le dispositif de commutation qui produit une image du trou de l'écran obturateur dans un plan image ou, par exemple, sur un film sensible à la lumière.

D'autres modes d'exécution et des combinaisons de caractéristiques avantageux ressortiront des exemples de réalisation suivants et de la totalité des revendications.

### Description sommaire des dessins

Les dessins utilisés pour l'explication des exemples de réalisation montrent:
- La fig. 1: une représentation schématique d'un dispositif de commutation selon l'invention;
- la fig. 2a: un diagramme des forces en fonction du déplacement selon l'état de la technique;
- la fig. 2b: un diagramme des forces en fonction du déplacement selon l'invention;
- la fig. 3: une représentation schématique en perspective d'une structure micromécanique selon l'invention;
- la fig. 4: une représentation schématique d'une section transversale de la structure selon la fig. 3;
- les fig. 5a, b: une représentation de principe d'une structure micromécanique présentant un obturateur linéairement mobile;
- la fig. 6: un schéma des connexions pour commander un réseau bidimensionnel de dispositifs de commutation selon l'invention;
- la fig. 7: une représentation schématique des signaux de commutation pour actionner un obturateur sélectionné de l'installation de commutation selon la fig. 6;
- la fig. 8: une représentation schématique d'un dispositif pour la génération ou le traitement d'images, respectivement.

### Moyens pour la réalisation de l'invention

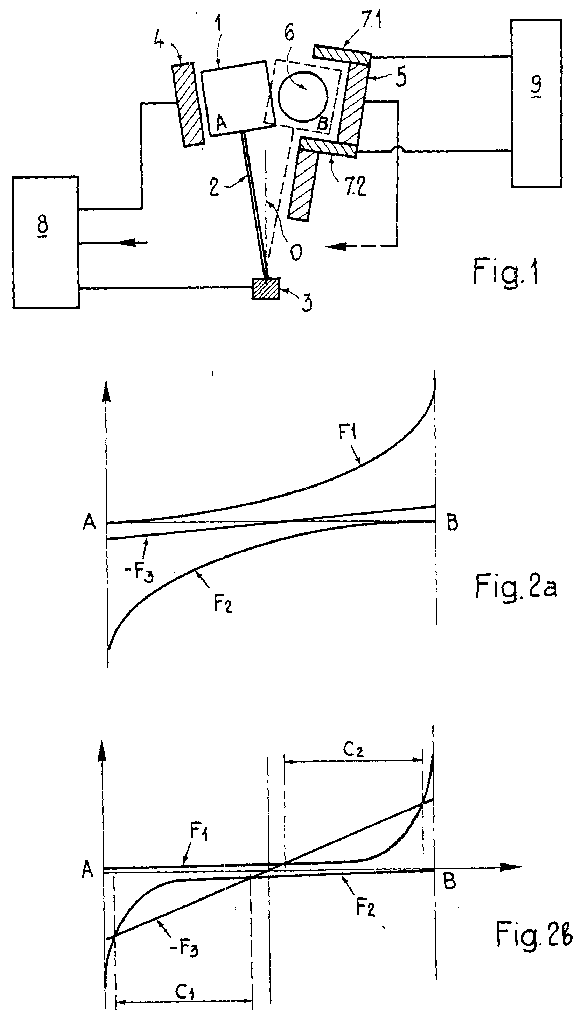

La fig. 1 montre, de manière schématique, les éléments les plus importants d'un dispositif selon l'invention. Un écran sous forme de plaquette 1 est fixé à une extrémité d'une tige élastique 2. L'autre extrémité de la tige 2 est serrée dans un ancrage 3.

L'écran 1 et la tige 2 représentent un système mécanique oscillant dont la fréquence propre est déterminée par la construction géométrique et matérielle de la tige 2 et de l'écran 1 (rapport entre la force élastique et la masse oscillante). L'écran 1 peut se déplacer alternativement entre deux positions d'extrémité A, B. Des électrodes d'entretien 4, 5 se trouvent dans les positions d'extrémité A, B et peuvent retenir l'écran 1 contre la force de rappel élastique.

Entre la ligne zéro 0 et l'électrode d'entretien 5 se trouve une ouverture 6 qui est libérée par l'écran 1 dans la position d'extrémité A et qui est obturée dans la position d'extrémité B. De cette façon, un trajet de rayons optiques peut être ouvert ou interrompu, respectivement.

Les électrodes d'entretien 4, 5 et l'écran 1, également revêtu d'une électrode, sont reliés électriquement à un circuit de commande 8 qui peut commuter le dispositif de commutation. En outre, des électrodes d'excitation 7.1, 7.2 sont prévues qui s'étendent à partir de l'électrode d'entretien 5 vers la position zéro 0. Elles sont connectées à un circuit d'excitation 9. Comme il sera expliqué plus loin, le circuit d'excitation 9 a pour fonction de ramener, en coopération avec les électrodes d'excitation 7.1, 7.2, l'écran 1 depuis la position zéro passive 0 vers une position opérationnelle près d'une des deux électrodes 4, 5.

La fig. 2a illustre les rapports des forces dans des éléments pendulaires micromécaniques connus. F1 et F2 représentent les forces électrostatiques, en fonction de la position, entre l'élément pendulaire et l'une ou l'autre, respectivement, des électrodes. -F3 désigne la force de rappel engendrée dans l'élément pendulaire (la tige) par la déviation mécanique. Dans l'état de la technique, les rapports des forces sont ajustés de telle sorte que les forces électrostatiques F1, F2 soient suffisamment élevées pour surmonter dans tous les cas la force de rappel F3 et ramener l'élément pendulaire depuis la position zéro à la position d'extrémité concernée. La vitesse de commutation est alors déterminée par la valeur de la force d'attraction électrostatique. Dans l'état de la technique, on n'obtient des vitesses de commutation élevées qu'à l'aide de champs puissants ou de tensions importantes.

La fig. 2b illustre les rapports des forces selon l'invention. Contrairement, à l'état de la technique, la force de rappel, dans une gamme principale d'amplitudes (par exemple C1 ou C2, respectivement), présente une valeur plus élevée que les forces d'attraction électrostatiques F1 et F2, respectivement, mais de sens opposé. Les forces électrostatiques F1, F2 qui croissent très vite lorsque les distances diminuent, ne sont utilisées que pour retenir l'élément pendulaire. La force motrice pour transporter l'élément pendulaire sur des distances de déviation importantes est la tension mécanique causée par la déformation dans l'élément pendulaire ou dans sa fixation, respectivement.

Dans la région de la position zéro 0, l'élasticité F3 présente un passage par zéro mais pas les forces électrostatiques F1, F2 (regardées séparément). Contrairement à l'état de la technique, les forces électrostatiques dans l'invention ne suffisent cependant pas pour ramener l'élément pendulaire à partir de la position zéro directement dans la position d'extrémité A, B désirée. Pour ce faire, on a prévu dans la fig. 1 des électrodes d'excitation spéciales 7.1, 7.2 qui sont situées devant l'électrode d'entretien 5 et peuvent alors agir avec des forces substantielles sur l'élément pendulaire se trouvant dans la position zéro. Afin de déplacer l'élément pendulaire dans une des deux positions d'extrémité A, B en utilisant les tensions les plus faibles possible, le circuit d'excitation 9 produit des signaux de tension de préférence périodiques qui commandent l'oscillation de l'élément pendulaire. L'excitation est maintenue jusqu'au moment où l'élément pendulaire peut être pris en charge par une des deux électrodes d'entretien 4, 5.

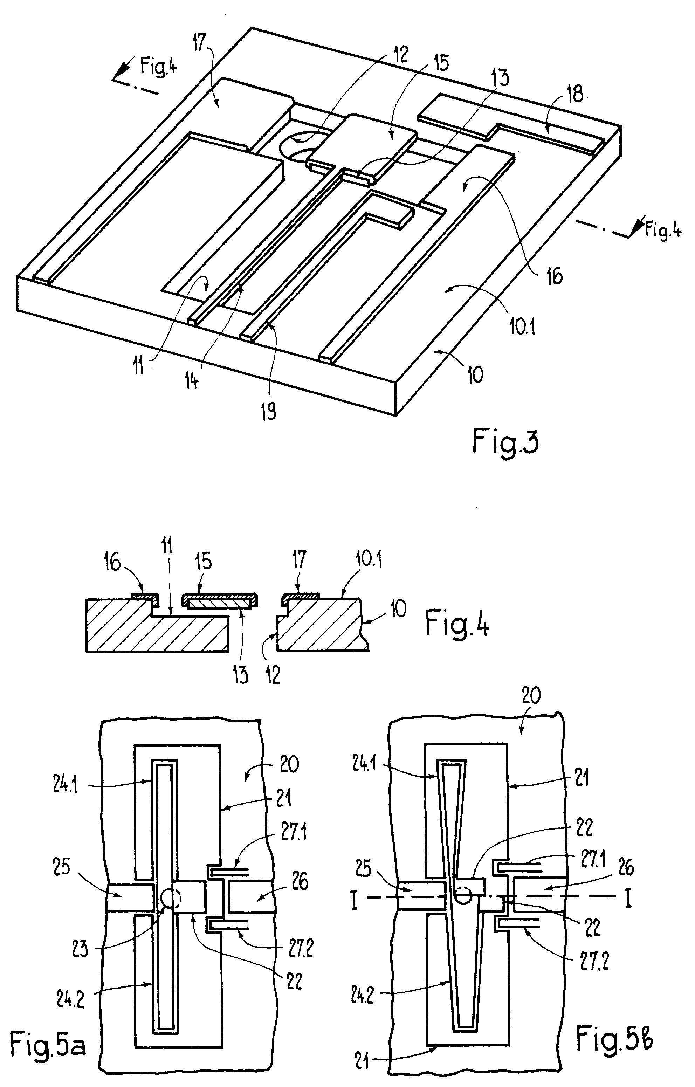

La fig. 3 montre un exemple de structure micromécanique selon l'invention. La structure décrite dans ce qui suit est réalisée dans un substrat 10, (par exemple, en silicium ou en une matière transparente) selon des méthodes connues en soi (voir par exemple l'état de la technique cité au début). La structure comprend une plaquette par exemple carrée 13 (ayant une longueur de côté de 30 µm par exemple et une épaisseur de 2 µm par exemple) qui est fixée à l'extrémité d'une tige 14 (ayant une longueur de 200 µm par exemple et une dimension transversale d'environ 2 µm x 2 µm. La plaquette 13 et la tige 14 peuvent, par exemple, être en polysilicium. La tige 14 étant longue et mince est élastiquement déformable. Dans le présent exemple, on vise un mouvement pendulaire dans un plan défini par la face principale 10.1 du substrat 10. La fréquence propre d'une oscillation mécanique dans le plan mentionné est déterminée essentiellement par les dimensions de la tige 14, la masse de la plaquette 13 et le coefficient d'élasticité du polysilicium. On sait que le plus la tige est rigide, plus la fréquence propre est élevée.

La plaquette 13 et la tige 14 forment un élément pendulaire disposé au-dessus d'une dépression ou d'un évidement 11, en forme de T. Dans un des bras de l'évidement sous forme de T, le substrat 10 comprend une ouverture 12.

Des électrodes d'entretien 16, 17 sont disposées aux extrémités des bras transversaux de l'évidement sous forme de T. L'élément pendulaire comprend également une électrode 15. Des électrodes d'excitation 18, 19 sont en plus prévues à un bras de l'évidement 11 sous forme de T. Elles s'étendent aussi loin que possible vers la position zéro de l'élément pendulaire afin de le mettre en oscillation le plus facilement possible. On peut également prévoir des électrodes d'excitation de part et d'autre de la position zéro.

La fig. 4 montre la structure de la fig. 3 selon une coupe transversale. On remarque nettement l'arrangement asymétrique de l'ouverture 12 par rapport à la position zéro de l'élément pendulaire. La plaquette 13 est maintenue à une distance de quelques micromètres au-dessus du fond de l'évidement. Les électrodes 15, 16 et 17 recouvrent , de préférence, les flancs latériaux de l'évidement respectivement de la plaquette 13.

La réalisation détaillée des électrodes à la surface du substrat n'est pas décrité en détail car elle est familière à l'homme du métier.

Il va de soi que la plaquette 13 ou son électrode 15, respectivement, ne doit pas entrer en contact direct avec les électrodes d'entretien 17, 18. Il est donc nécessaire de prévoir des couches isolantes, desbutées ou autres moyens équivalents, par exemple, sur les parois intérieures de l'évidement 11 dans la région des électrodes d'entretien 17, 18.

Dans le mode d'exécution représenté à la fig. 3, la plaquette 13 de l'élément pendulaire se déplace selon une trajectoire courbe. Si cela n'est pas désiré, on peut, par exemple, réaliser une structure selon les fig. 5a, b. De façon analogue au premier exemple d'exécution, un évidement 21 (dessiné en hachure) est prévu dans un substrat 20. Au-dessus de l'évidement, un écran sous forme de plaquette 22 est maintenu de manière à pouvoir être déplacé linéairement dans un plan par deux bras 24.1, 24.2. Une ouverture 23 est réalisée dans le fond de l'évidement 21 au-dessous de l'écran 22. Cette ouverture est dimensionnée de telle sorte qu'elle est à demi obturée lorsque l'écran 22 se trouve dans la position de repos (selon la fig. 5a). Quand l'écran 22 est maintenu par l'électrode d'entretien 25, l'ouverture 23 se trouve totalement obturée. Quand l'écran 22 est maintenu par l'électrode d'entretien 26 d'en face, l'ouverture 23 est ouverte.

La particularité de la présente réalisation est que l'écran carré ou rectangulaire 22 est retenu de façon symétrique par deux bras en forme de U 24.1, 24.2. On a montré dans la partie supérieure de la fig. 5b comment le bras 24.1 est déformé en une forme quasiment triangulaire lorsque l'écran 22 est retenu par l'électrode d'entretien 25. La moitié inférieure de la fig. 5b montre l'autre cas où les deux branches du bras 24.2 sont écartées en forme de trapèze. (Les bras 24.1, 24.2 se déforment naturellement toujours de façon symétrique l'un par rapport à l'autre.)

Les bras 24.1, 24.2 en forme de U sont attachés, dans le présent exemple, aux coins adjacents de l'écran 22. Il va de soi que d'autres positions de l'écran (par exemple le centre d'un côté) sont également utilisables comme lieus de raccordement.

En plus, on distingue dans les fig. 5a, b des électrodes d'excitation 27.1, 27.2. Elles s'étendent à côté de l'électrode d'entretien 26 vers l'écran 22. Ce dernier peut se glisser entre les électrodes d'excitation 27.1, 27.2.

Le dispositif de commutation selon l'invention sera utilisé de préférence non pas individuellement mais en association avec d'autres dispositifs identiques formant un réseau. Par exemple, une pluralité d'éléments de commutation selon l'invention sont arrangés de maniére à former un réseau régulier bidimensionnel (par exemple rectangulaire ou à nid d'abeilles) et sont commandés comme il sera décrit dans ce qui suit.

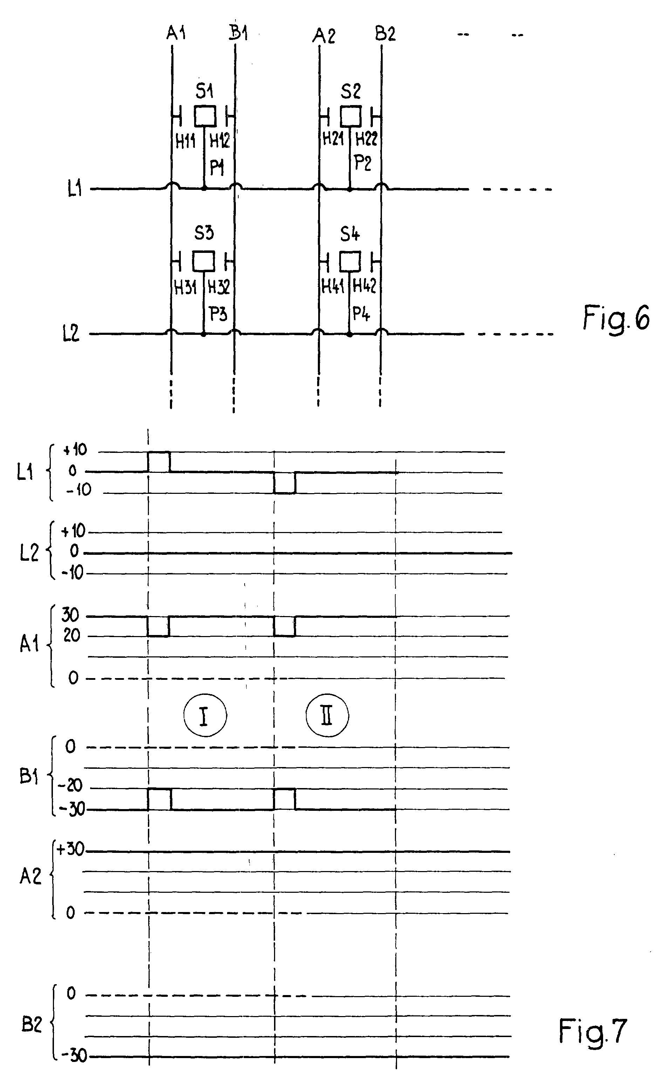

La fig. 6 montre quatre éléments de commutation S1, ..., S4 qui sont arrangés en deux rangs et en deux colonnes. Chaque élément de commutation S1, ..., S4 comprend deux électrodes d'entretien H11, H12; H21, H22; H31, H32 et H41, H42, respectivement. Entre les électrodes H11 et H12; ...; H41 et H42, respectivement, d'un élément de commutation S1, ..., S4 se trouve une électrode pendulaire P1, ..., P4. En l'absence de tension, les électrodes pendulaires P1, ..., P4 se trouvent dans la position zéro. Dans l'état opérationnel, elles sont retenues par l'une des deux électrodes d'entretien correspondantes H11 ou H12, ..., H41 ou H42.

Les électrodes pendulaires P1, P2 des éléments de commutation S1, S2 du même rang sont connectées à un conducteur commun L1. De façon analogue, les électrodes pendulaires P3 et P4 sont reliées par un conducteur L2. Les électrodes d'entretien sont connectées par colonnes: H11 et H31 au conducteur A1, H12 et H32 au conducteur B1, H21 et H41 au conducteur A2 et H22 et H42 au conducteur B2.

La fig. 7 montre schématiquement un exemple de signaux de commande. Sans limitation de la généralité, on supposera que la tension d'entretien est de 20.V.

Dans l'intervalle I, le commutateur S1 est commandé de telle sorte qu'à la fin de l'intervalle I, l'électrode pendulaire P1 soit en contact avec l'électrode d'entretien H12 et que les positions des autres commutateurs restent inchangées. Au début de l'intervalle I, le conducteur L1 est temporairement porté de 0 à +10 V par exemple, le conducteur A1 simultanément abaissé de 30 V par exemple à 20 V, et le conducteur B1 est porté de -30 V à -20 V. Si l'électrode pendulaire avait été retenue auparavant par l'électrode d'entretien H11, elle se dégagera de cette position car la tension entre H11 et P1 tombe au-dessous de la tension d'entretien. Après avoir effectué une demi-oscillation, l'électrode pendulaire P1 est attirée par la seconde électrode d'entretien H12 car la tension d'entretien nécessaire de 20 V est présente entre les éléments mentionnés.

Si l'électrode pendulaire P1 se trouvait déjà retenue par l'électrode d'entretien H12 avant la commutation, elle y resterait car la tension entre L1 et B1 ne descend pas au-dessous de la tension d'entretien.

Les conducteurs L2, A2 et B2 restent à leur niveau de tension normal de 0 V, +30 et -30 V, respectivement, au cours de la commutation mentionnée. Les éléments de commutation S2, S3, S4 ne peuvent donc pas commuter.

L'ensemble des signaux permettant de commuter l'électrode pendulaire P1 sur l'électrode de maintien H11, si elle ne s'y trouve pas déjà, est représenté dans l'intervalle II. Les conducteurs L1 et A1 sont abaissés de 10 V chacun, et le conducteur B1 est augmenté de 10 V.

Un grand réseau d'éléments de commutation peut être commandé de la manière décrite précédemment.

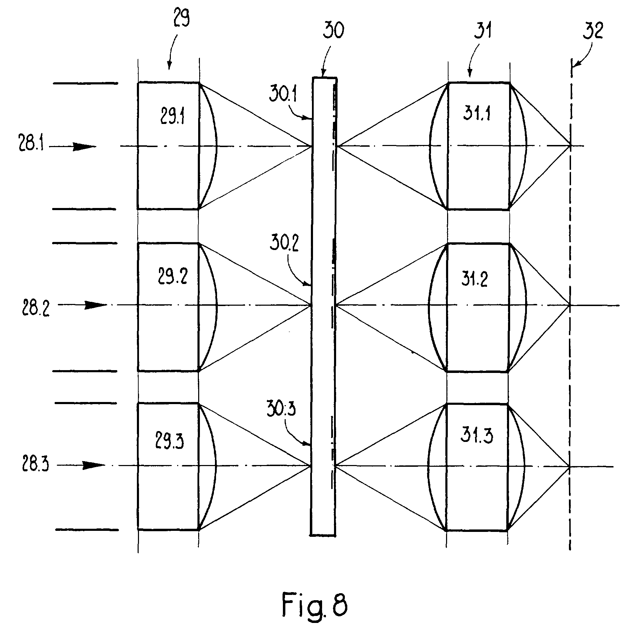

Une application des structures bidimensionnelles de commutation sera encore décrite à l'aide de fig. 8. Il va de soi qu'en pratique, non seulement trois mais beaucoup plus de voies optiques de traitement sont prévus en parallèle. Les trois faisceaux lumineux 28.1, ..., 28.3 venant de droite dans la fig. 8, sont incidents sur un système de focalisation 29 comprenant une microlentille 29.1, ..., 29.3 pour chaque faisceaux lumineux incident 28.1, ..., 28.3. Les faisceaux lumineux sont concentrés dans un plan de focalisation commun dans lequel une installation de commutation 30 selon l'invention est disposée. L'installation de commutation 30 comprend une pluralité d'éléments de commutation identiques 30.1, ..., 30.3 (par exemple correspondant à celui de la fig. 3). Les faisceaux lumineux 28.1, ..., 28.3 sont donc focalisés aux ouvertures de passage des éléments de commutation. Un système d'image 31 se trouvant derrière l'installation de commutation en forme de disque 30 produit une image des ouvertures de passage sur un plan d'image 32. Le système d'image 31 peut également consister en une pluralité de microlentilles 31.1, ..., 31.3.

Des images peuvent être générées en utilisant le dispositif optique représenté dans la fig. 8 en commandant ou positionnant, respectivement, par exemple les éléments de commutation 30.1, ..., 30.3 selon une trame d'image électroniquement mémorisée. Il est également possible de modifier une image définie par l'intensité des rayons lumineux 28.1, ..., 28.3. On placera par exemple dans le plan d'image un support comprenant un film sensible à la lumière.

L'invention ne se limite naturellement pas aux exemples d'exécution décrits. La fixation et l'écran peuvent être sujets à des modifications multiples. Il est important que les dimensions géométriques et la distribution de masse de l'élément pendulaire soient adaptées à la vitesse de commutation voulue. On peut commander des chemins du pendule relativement longs par des tensions modestes car les forces d'attraction électrostatiques n'ont pas besoin d'agir sur la totalité du trajet du pendule.

Au lieu d'écrans se déplaçant dans leur propre plan, on peut également utiliser des ailettes pivotantes. La géométrie du mouvement effectué correspond alors à celle connue de l'état de la technique mais leur cinématique se distingue en ce qu'il y a une dynamique dominée par la fixation élastique et non pas par les forces d'attraction électrostatique.

De cette manière, l'invention peut s'appliquer, par exemple, aux structures pivotantes symétriques décrites par exemple dans le CH-633'902 (fig. 1) ou le US-5'142'405 (fig. 2 à 5).

L'application des structures micromécaniques de l'invention à la modulation optique représente le domaine d'application préféré mais pas exclusif. On peut par exemple réaliser des commutateurs similaires aux relais, l'électrode pendulaire établissant des contacts avec des conducteurs de courant différents dans l'une ou l'autre des positions d'extrémité. (L'isolation électrique entre l'électrode d'entretien et l'élément pendulaire est naturellement nécessaire comme auparavant.)

En règle générale, les électrodes d'entretien et l'élément pendulaire sont exécutés de façon symétrique par rapport à la position zéro. On n'exclut cependant pas de structures asymétriques (par exemple une variation de la longueur effective du pendule par rapport à la direction de déviation).

En résumé, il convient de retenir que l'invention a créé une nouvelle conception de commutation dans laquelle le temps de commutation n'est pas déterminé premièrement par la tension électrique appliquée mais par la fréquence oscillation mécanique propre.

## Revendications

1. Dispositif de commutation pour des rayons optiques, comprenant un élément pendulaire (1) pouvant se déplacer en va-et-vient entre deux positions d'extrémité (A, B), des électrodes d'actionnement stationnaires (4, 5) situées dans ces positions d'extrémité (A, B), et un circuit de commande (8) pour agir sur l'élément pendulaire (1) avec des forces électrostatiques, caractérisé en ce que l'élément pendulaire (1) est retenu (2) de manière élastique de telle sorte que la valeur d'une force élastique de rappel agissant vers une position zéro (O) est plus grande, dans une gamme essentielle d'amplitudes (C1, C2), que la force d'attraction électrostatique, engendrée par le circuit de commande (8) et une des électrodes d'actionnement (4, 5) et agissant en sens opposé, de sorte que l'élément pendulaire (1) présente un temps de commutation essentiellement déterminé par sa fréquence propre d'oscillation mécanique.

2. Dispositif de commutation selon la revendication 1, caractérisé en ce que la force de rappel a une valeur plus grande, au moins dans la moitié de la région de déplacement, que la force d'attraction électrostatique des électrodes d'actionnement (4, 5).

3. Dispositif de commutation selon l'une des revendications 1 ou 2, caractérisé en ce qu'il est réalisé sous forme de structure micromécanique sur un substrat (10) ou dans ce substrat.

4. Dispositif de commutation selon l'une des revendications 1 à 3, caractérisé en ce qu'il consiste essentiellement en un matériau cristallin ou polycristallin, en particulier en polysilicium, ou en métal.

5. Dispositif de commutation selon l'une des revendications 1 à 4, caractérisé en ce que l'élément pendulaire (1) comprend un écran en forme de plaquette (1) maintenu par une fixation élastique de manière à pouvoir être déplacé latéralement dans un plan défini (2; 14; 24.1, 24.2).

6. Dispositif de commutation selon la revendication 5, caractérisé en ce que la fixation comprend au moins un élément de tige (2; 14) flexible dans le plan défini.

7. Dispositif de commutation selon l'une des revendications 3 à 6, caractérisé en ce qu'une ouverture (12) est prévue comme passage de rayons dans un plan situé derrière l'élément pendulaire (13) entre la position zéro et l'une des positions d'extrémité, l'ouverture étant ouverte ou obturée selon la position de l'élément pendulaire (13).

8. Dispositif de commutation selon l'une des revendications 1 à 7, caractérisé en ce que des électrodes d'excitation (7.1, 7.2) sont prévues pour ramener l'élément pendulaire (1) depuis la position zéro (O) dans l'une des positions d'extrémité (A, B) à l'aide d'oscillations propres.

9. Dispositif de commutation selon l'une des revendications 1 à 8, caractérisé en ce que le circuit de commande (8) est relié électriquement à une électrode (15) agencée sur l'élément pendulaire (13) et aux électrodes d'actionnement (16, 17) pour commander une commutation par un abaissement de la tension entre l'électrode d'actionnement (16 ou 17, respectivement) et l'élément pendulaire (13).

10. Procédé pour commander un dispositif de commutation selon l'une des revendications 1 à 9, caractérisé en ce que l'élément pendulaire (1) est retenu par une tension d'entretien dans la position d'extrémité (A ou B, respectivement) concernée et relâché par une réduction temporaire de la tension entre l'élément pendulaire (1) et l'électrode (4) pour qu'il puisse osciller, à l'aide de son oscillation propre, dans la position d'extrémité opposée (B ou A, respectivement) sous l'influence de la force élastique de rappel en étant attiré dans la dite position par la tension d'entretien de l'électrode d'actionnement opposée (5).

11. Procédé selon la revendication 10, caractérisé en ce que la tension est abaissée pendant un laps de temps plus petit que pi/2Wo, Wo étant la fréquence propre d'oscillation.

12. Procédé selon la revendication 10, caractérisé en ce que les électrodes d'excitation (7.1, 7.2) sont alimentées avec la fréquence propre Wo de l'élément pendulaire (1) jusqu'à ce que l'élément pendulaire (1) puisse être attiré par une électrode d'actionnement (4, 5).

13. Installation de commutation, comprenant une pluralité de dispositifs de commutation selon la revendication 1, dans laquelle les électrodes pendulaires (P1, ..., P4) et/ou leurs électrodes d'actionnement (H11, ... H42) de plusieurs dispositifs de commutation (S1, ..., S4) sont reliés par des conducteurs communs (L1, L2 et A1, B1, A2, B2, respectivement) au circuit de commande, un dispositif de commutation sélectionné (S1) pouvant être actionné par un abaissement de la tension sur les conducteurs (A1, L1 ou B1, L1, respectivement) se croisant à ce dispositif de commutation (S1).

14. Installation de commutation selon la revendication 13, caractérisée en ce que les dispositifs de commutation (S1, ..., S4) sont arrangés pour former un réseau régulier bidimensionnel, et que les électrodes pendulaires (P1, ..., P4) ou leurs électrodes d'actionnement (H11, ..., H42), respectivement, des dispositifs de commutation (S1, ..., S4) sont reliées par rangs ou colonnes, respectivement.

15. Installation optique comprenant au moins un dispositif de commutation selon la revendication 1, caractérisée en ce qu'elle constitue écran commandé et en ce qu'elle est disposée dans ou auvoisinage du plan focal d'un système de lentilles optique (29).

16. Installation selon la revendication 15, caractérisée en ce qu'un premier système de lentilles (29) focalise au moins un faisceau lumineux sur une ouverture de passage du dispositif de commutation (30.1, ..., 30.3), et en ce qu'un second système de lentilles (31), situé derrière les ouvertures de passage, transmet la lumière à un plan d'image (32).

## Patentansprüche

1. Schaltvorrichtung für optische Strahlen mit einem zwischen zwei Extremlagen (A, B) hin und her bewegbaren Pendelelement (1), ortsfesten Betätigungselektroden (4, 5) in den Extremlagen (A, B) und einer Steuerschaltung (8), um mit elektrostatischen Kräften auf das Pendelelement (1) einzuwirken, dadurch gekennzeichnet, dass das Pendelelement (1) derart federelastisch gehalten (2) ist, dass eine entsprechende, gegen eine Nulllage (0) wirkende elastische Rückstellkraft in einem wesentlichen Amplitudenbereich (C1, C2) betragsmässig grösser als die durch die Steuerschaltung (8) und die Betätigungselektroden (4, 5) erzeugte entgegengesetzt wirkende elektrostatische Anziehungskraft ist, so dass das Pendelelement (1) eine durch seine Eigenfrequenz bestimmte Kommutationszeit hat.

2. Schaltvorrichtung nach Anspruch 1, dadurch gekennzeichnet, dass die Rückstellkraft mindestens im halben Amplitudenbereich betragsmässig grösser als die elektrostatische Anziehungskraft der Betätigungselektroden (4, 5) ist.

3. Schaltvorrichtung nach einem der Ansprüche 1 oder 2, dadurch gekennzeichnet, dass sie als mikromechanische Struktur auf einem Substrat (10) oder in einem Substrat ausgebildet ist.

4. Schaltvorrichtung nach einem der Ansprüche 1 bis 3, dadurch gekennzeichnet, dass sie im Wesentlichen aus kristallinem oder polykristallinem Material, insbesondere Polysilizium, oder aus Metall besteht.

5. Schaltvorrichtung nach einem der Ansprüche 1 bis 4, dadurch gekennzeichnet, dass das Pendelelement (1) eine plattenförmige Blende (1) aufweist, die durch eine elastische Halterung in einer definierten Ebene (2; 14; 24.1, 24.2) seitlich verschiebbar gehalten ist.

6. Schaltvorrichtung nach Anspruch 5, dadurch gekennzeichnet, dass die Halterung mindestens ein in der definierten Ebene biegbares Stabelement (2, 14) umfasst.

7. Schaltvorrichtung nach einem der Ansprüche 3 bis 6, dadurch gekennzeichnet, dass in einer Ebene hinter dem Pendelelement (13) zwischen der Nulllage und der einen Extremlage eine Öffnung (12) als Strahlendurchtritt vorgesehen ist, welche je nach Lage des Pendelelements (13) offen oder geschlossen ist.

8. Schaltvorrichtung nach einem der Ansprüche 1 bis 7, dadurch gekennzeichnet, dass Anregungselektroden (7.1, 7.2) vorgesehen sind, um das Pendelelement (1) aus der Nulllage (0) mit Hilfe von Eigenschwingungen in eine der Extremlagen (A, B) zu bringen.

9. Schaltvorrichtung nach einem der Ansprüche 1 bis 8, dadurch gekennzeichnet, dass die Steuerschaltung (8) elektrisch mit einer auf dem Pendelelement (13) ausgebildeten Elektrode (15) und mit den Betätigungselektroden (16, 17) verbunden ist, um einen Schaltvorgang durch ein Absenken der Spannung zwischen Betätigungselektrode (16 resp. 17) und Pendelelement (13) einzuleiten.

10. Verfahren zum Betreiben einer Schaltvorrichtung nach einem der Ansprüche 1 bis 9, dadurch gekennzeichnet, dass das Pendelelement (1) mit einer Haltespannung in der jeweiligen Extremlage (A resp. B) gehalten wird und durch eine kurzzeitige Reduktion der Spannung zwischen Pendelelement (1) und Elektrode (4) losgelassen wird, so dass es einen Teil einer Eigenschwingung ausführend unter Einfluss der elastischen Rückstellkraft in die gegenüberliegende Extremlage (B resp. A) schwingen kann und dort durch die Haltespannung der gegenüberliegenden Betätigungselektrode (5) aufgefangen wird.

11. Verfahren nach Anspruch 10, dadurch gekennzeichnet, dass die Spannung während einer Zeitdauer kleiner als π/2wₒ, wₒ = Resonanzfrequenz, abgesenkt wird.

12. Verfahren nach Anspruch 10, dadurch gekennzeichnet, dass die Anregungselektroden (7.1, 7.2) mit der Eigenfrequenz wₒ des Pendelelements (1) beaufschlagt werden, bis das Pendelelement (1) von einer Betätigungselektrode (4, 5) aufgefangen werden kann.

13. Schaltanordnung mit einer Mehrzahl von Schaltvorrichtungen nach Anspruch1, bei welcher mehrere Schaltvorrichtungen (S1, ..., S4) mit ihren Pendelelektroden (P1, ..., P4) und/oder ihren Betätigungselektroden (H11, ..., H42) durch gemeinsame Leitungen (L1, L2 resp. A1, B1, A2, B2) mit der Steuerschaltung verbunden sind, wobei eine ausgewählte Schaltvorrichtung (S1) durch Absenken der Spannung an den sich bei der Schaltvorrichtung (S1) kreuzenden Leitungen (A1, L1 resp. B1, L1) betätigbar ist.

14. Schaltanordnung nach Anspruch 13, dadurch gekennzeichnet, dass die Schaltvorrichtung (S1, ..., S4) in einem regelmässigen zweidimensionalen Feld angeordnet sind und dass die Schaltvorrichtungen (S1, ..., S4) reihen- bzw. spaltenweise mit ihren Pendelelektronen (P1, ..., P4) beziehungsweise Betätigungselektroden (H11, ..., H42) verbunden sind.

15. Optische Einrichtung mit mindestens einer Schaltvorrichtung nach Anspruch 1, welche als steuerbare Blende im oder nahe beim Fokus eines optischen Linsensystems (29) angeordnet ist.

16. Einrichtung nach Anspruch 15, dadurch gekennzeichnet, dass das genannte, erste Linsensystem (29) einen Lichtstrahl auf eine Durchtrittsöffnung der Schaltvorrichtung (30.1, ..., 30.3) fokussiert und dass ein zweites Linsensystem (31) hinter den Durchtrittsöffnungen das Licht in eine Bildebene (32) überträgt.

## Claims

1. Switching device for optical rays which comprises a swinging element (1) that is able to move back and forth between two end positions (A, B), stationary actuating electrodes (4, 5) that are located in these end positions (A, B), and a control circuit (8) to act on swinging element (1) with electrostatic forces, characterised in that swinging element (1) is held (2) in an elastic manner in such a way that the value of an elastic return force that acts toward a zero position (0) is greater, in a primary amplitude range (C1, C2), than the force of electrostatic attraction that is produced by control circuit (8) and one of actuating electrodes (4, 5) and that acts in the opposite direction, in such a way that swinging element (1) has a switching time that is primarily determined by its natural mechanical oscillation frequency.

2. Switching device according claim 1, characterised in that the return force has a grater value, at least in half the region of movement, than the electrostatic force of attraction of actuating electrodes (4, 5).

3. Switching device according to one of claims 1 or 2, characterised in that it is produced in the form of a micromechanical structure on a substrate (10) or in this substrate.

4. Switching device according to one of claims 1 to 3, characterised in that it consists primarily of a crystalline or polycrystalline material, in particular of polysilicon, or of metal.

5. Switching device according to one of claims 1 to 4, characterised in that swinging element (1) comprises a screen in the form of a strip (1) that is held by an elastic attachment, in such a way that it can be moved laterally in a defined plane (2; 14; 24.1, 24.2).

6. Switching device according to claim 5, characterised in that the attachment comprises at least one flexible rod element (2; 14) in the defined plane.

7. Switching device according to one of claims 3 to 6, characterised in that an opening (12) is provided as a passage for rays in a plane that is located behind swinging element (13) between the zero position and one of the end positions, with the opening being open or closed depending on the position of swinging element (13).

8. Switching device according to one of claims 1 to 7, characterised in that excitation electrodes (7.1, 7.2) are provided to bring swinging element (1) from zero position (0) into one of end positions (A, B) by means of natural oscillations.

9. Switching device according to one of claims 1 to 8, characterised in that control circuit (8) is electrically connected to an electrode (15) that is arranged on swinging element (13) and on actuating electrodes (16, 17) to control switching by lowering the voltage between actuating electrode (16 or 17, respectively) and swinging element (13).

10. Process for controlling a switching device according to one of claims 1 to 9, characterised in that swinging element (1) is held by a holding voltage in respective end position (A or B, respectively) and released by a temporary reduction in the voltage between swinging element (1) and electrode (4) so that it can oscillate, by means of its natural oscillation, into opposite end position (B or A, respectively) under the influence of the elastic return force by being drawn into said position by the holding voltage of opposite actuating electrode (5).

11. Process according to claim 10, characterised in that the voltage is lowered for a period of time that is shorter than π/2wₒ, with wₒ being the natural oscillation.

12. Process according to claim 10, characterised in that excitation electrodes (7.1, 7.2) are fed with natural frequency Wₒ of swinging element (1) until swinging element (1) can be drawn in by an actuating electrode (4, 5).

13. Switching unit that comprises a number of switching devices according to claim 1, in which swinging electrodes (P1, ..., P4) and/or their actuating electrodes (H11, ..., H42) of several switching devices (S1, ..., S4) are connected by common conductors (L1, L2 and A1, B1, A2, B2, respectively) to the control circuit, whereby a selected switching device (S1) may be actuated by a lowering of the voltage on conductors (A1, L1 or B1, L1, respectively) that intersect at this switching device (S1).

14. Switching unit according to claim 13, characterised in that switching devices (S1, ..., S4) are arranged to form a regular two-dimensional grid, and that swinging electrodes (P1, ..., P4) or their actuating electrodes (H11, ..., H42), respectively, of switching devices (S1, ..., S4) are connected by rows or columns, respectively.

15. Optical unit that comprises at least one switching device according to claim 1, wherein it constitutes a controlled screen and wherein it is placed in or near the focal plane of an optical lens system (29).

16. Unit according to claim 15, characterised in that a first lens system (29) focuses at least one light beam on a passage opening of switching device (30.1, ..., 30.3) and that a second lens system (31), located behind the passage openings, transmits the light to an image plane (32).
